# EUROPEAN PATENT APPLICATION

(11) **EP 1 146 468 A2**
(43) Date of publication of application: **17.10.2001**
(21) Application number: 01303315.4
(22) Date of filing: 09.04.2001
(51) Int. Cl.: G06F 17/60

(54) **System and method for predicting timing and costs of service events in a life cycle of a product**

(30) Priority: 13.04.2000 US 549035
(71) Applicant: GENERAL ELECTRIC COMPANY, Schenectady, NY 12345 (US)
(72) Inventor: Aragones, James Kenneth, Clifton Park, New York 12065 (US); Cardella, Aidan Thomas, Schenectady, New York 12308 (US); Lee, James, West Chester, Ohio 45069 (US); Aragones, Amy Victoria, Clifton Park, New York 12065 (US); Fullington, Michael Dean, Cincinnati, Ohio 45240 (US); Morse, Peter Neville, Seattle, Washingtonn 98070 (US); Osborn, Brock Estel, Niskayuna, New York 12309 (US); Tucker, William Talbert, Schenectady, New York 12309 (US); Stein, Jeffrey William, East Greenbush, New York 12061 (US)
(74) Representative: Goode, Ian Roy

(57) **Abstract**

A system (28) and method for predicting timing and costs of service events in a life cycle of a product. A service database (30) contains a plurality of service information for the product. A preprocessor (32) processes the plurality of service information into a predetermined format. A statistical analyzer (34) analyzes the plurality of processed service information to determine a plurality of compartment failure information. A simulator (40), simulates the service events of the product according to the plurality of compartment failure information and predicts the timing and costs of the service events.

## Description

This disclosure relates generally to servicing products and systems and more particularly to predicting the timing and costs of service events in a life cycle of a product or a system.

The market for long-term contractual agreements has grown at high rates over recent years for many of today's service organizations. As the service organizations establish long-term contractual agreements with their customers, it becomes important to understand the expected costs and risks associated with the pricing of service contracts and portfolio management of the contracts. In addition, the service organizations need to have an understanding of the planning of repairs (shop workload planning) and how the introduction of new technology will affect their service contracts. In order to analyze these issues, it is necessary to correctly model the underlying behavior of the product or system so that each can be serviced in the most cost-effective manner.

Currently available analytical practices are unable to accurately model service requirements for complex products or systems. Typically, these models contain poor cost information which result in the service organization inefficiently managing the risk associated with their service portfolios, failing to respond to customer needs and new technology, which all lead to lower long-term contract profitability. A standard time-series method is one particular approach that has been used to model the service requirements of repairable systems such as aircraft engines, automobiles, locomotives and other high tech products. This time-series method examines historical data obtained over a five to ten year period and forms a trend line on either system costs and/or number of repairs made to the system. The trend line is then used to predict future costs and number of repairs. A limitation with this time series method is that it does not give details of failures at a compartmental level. A compartment is a physical or performance related sub-system of the repairable product, which when it fails causes the product to require maintenance or servicing. Other limitations with the standard time series method is that it does not account for the life cycle of the repairable product and thus does not provide a distribution of the expected service events for the product. An analysis based on engineering relationships to determine compartment parameters is another method used to model the service requirements of repairable systems. A limitation with this analysis is that it is not well based in underlying statistics, and thus cannot be shown to accurately model the repairable product on an ongoing basis.

In order to overcome the above problems, there is a need for an approach that can model the service requirements of repairable systems that is accurate and has a comprehensive statistical framework. Such an approach will lead to better cost projections, more realistic and effective risk management, new technology introduction and day-to-day service that is more responsive to customer needs and higher long-term contract profitability.

In accordance with one embodiment of this disclosure, there is a system for predicting the timing and costs of service events in a life cycle of a product formed from a plurality of compartments. The system comprises a service database that contains a plurality of service information for the product. A preprocessor processes the plurality of service information into a predetermined format. A statistical analyzer analyzes the plurality of processed service information to determine a plurality of compartment failure information. A simulator, simulates the service events of the product according to the plurality of compartment failure information and predicts the timing and costs of the service events.

Similarly, in this disclosure there is a method for predicting timing and costs of service events in a life cycle of a product formed from a plurality of compartments. The method comprises storing a plurality of service information for the product; preprocessing the plurality of service information into a predetermined format; analyzing the plurality of processed service information to determine a plurality of compartment failure information; and simulating the service events of the product according to the plurality of compartment failure information and predicting the timing and costs of the service events.

Also, in this disclosure there is a computer-readable medium storing computer instructions for instructing a computer to predict timing and costs of service events in a life cycle of a product formed from a plurality of compartments. The computer instructions comprise storing a plurality of service information for the product; preprocessing the plurality of service information into a predetermined format; analyzing the plurality of processed service information to determine a plurality of compartment failure information; and simulating the service events of the product according to the plurality of compartment failure information and predicting the timing and costs of the service events.

An embodiment of the invention will now be described, by way of example, with reference to the accompanying drawings, in which:
Fig. 1 shows a schematic of a general purpose computer system in which a system for predicting the timing and costs of service events in a life cycle of a product operates;
Fig. 2 shows a schematic diagram of a system for predicting the timing and costs of service events in a life cycle of a product that operates on the computer system shown in Fig. 1;
Fig. 3 shows a flow chart describing actions performed by the system shown in Fig. 2;
Fig. 4 shows a flow chart describing the actions performed by the statistical analyzer shown in Fig. 2;
Fig. 5 shows a flow chart describing the actions performed by the simulator shown in Fig. 2; and
Fig. 6 shows a flow diagram describing the validating actions performed by the system shown in Fig. 2.

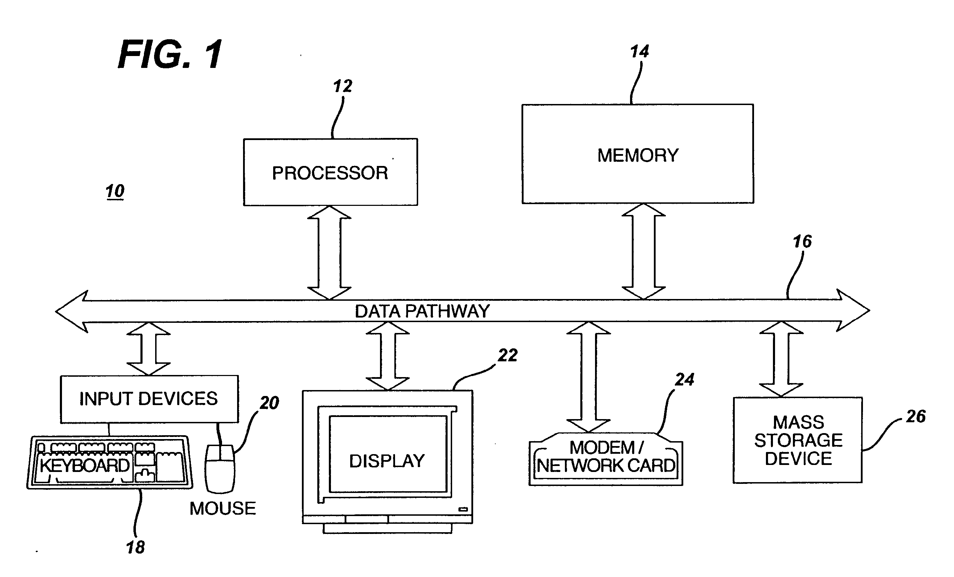

Fig. 1 shows a schematic of a general-purpose computer system 10 in which a system for predicting the timing and costs of service events in a life cycle of a product operates. The computer system 10 generally comprises a processor 12, a memory 14, input/output devices, and data pathways (e.g., buses) 16 connecting the processor, memory and input/output devices. The processor 12 accepts instructions and data from the memory 14 and performs various calculations. The processor 12 includes an arithmetic logic unit (ALU) that performs arithmetic and logical operations and a control unit that extracts instructions from memory 14 and decodes and executes them, calling on the ALU when necessary. The memory 14 generally includes a random-access memory (RAM) and a read-only memory (ROM), however, there may be other types of memory such as programmable read-only memory (PROM), erasable programmable read-only memory (EPROM) and electrically erasable programmable read-only memory (EEPROM). Also, the memory 14 preferably contains an operating system, which executes on the processor 12. The operating system performs basic tasks that include recognizing input, sending output to output devices, keeping track of files and directories and controlling various peripheral devices.

The input/output devices comprise a keyboard 18 and a mouse 20 that enter data and instructions into the computer system 10. A display 22 allows a user to see what the computer has accomplished. Other output devices could include a printer, plotter, synthesizer and speakers. A modem or network card 24 enables the computer system 10 to access other computers and resources on a network. A mass storage device 26 allows the computer system 10 to permanently retain large amounts of data. The mass storage device may include all types of disk drives such as floppy disks, hard disks and optical disks, as well as tape drives that can read and write data onto a tape that could include digital audio tapes (DAT), digital linear tapes (DLT), or other magnetically coded media. The above-described computer system 10 can take the form of a hand-held digital computer, personal digital assistant computer, personal computer, workstation, mini-computer, mainframe computer and supercomputer.

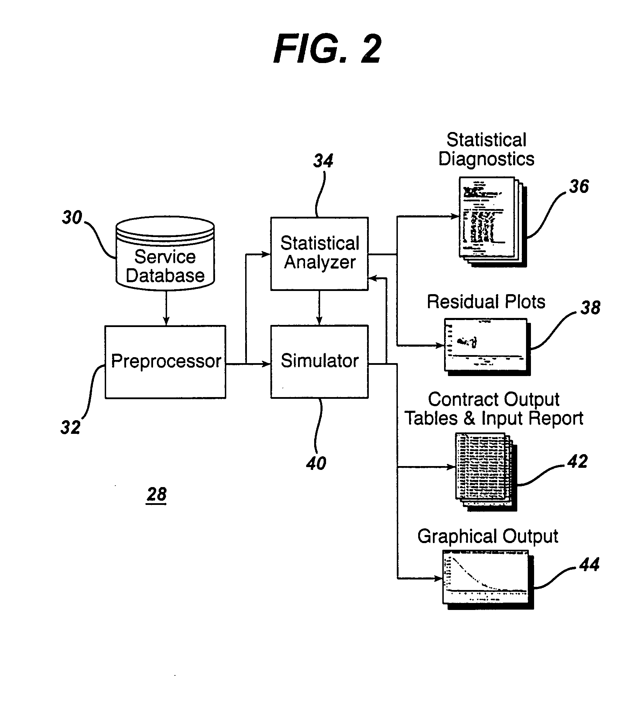

Fig. 2 shows a schematic diagram of a system 28 for predicting the timing and costs of service events in a life cycle of a product that operates on the computer system 10 shown in Fig. 1. In the system 28, a service database 30 stores a plurality of service information for the product. The plurality of service information varies depending on the product. Generally, the plurality of service information will comprise information such as compartment definitions of the product (i.e., a physical or performance related subsystem that is considered as a unit, which when it fails requires that the product needs maintenance or servicing), repair history of the product (e.g., dates of service events, types of service events, time for a compartment to fail, etc.), as well as any factors which may play a role in explaining the length of time which passes between service events (e.g., environment, operating conditions of the product, product configuration, equipment age, etc.). Other factors may include types of maintenance, maintenance cost data, cycle time of the product, usage of the product, contract terms and conditions, equipment age and vintage, etc. In this disclosure, the product will be described with reference to an aircraft engine; however, other products such as a power system, a locomotive or any other electrical, chemical or mechanical product, where it is desirable to predict timing and costs of service events in its life cycle, may be used.

Referring to Fig. 2, a preprocessor 32 processes the plurality of service information into a predetermined format. The preprocessing includes extracting the plurality of service information from the service database 30; assigning each data record in the database to a compartment depending upon the engineering labeled removal cause; creating new variables from existing variables (e.g., censoring variables, customer indicator variables), deleting outliers (e.g., etsv<0) and producing summary statistics of the data set (e.g., number of records for each compartment). After performing these acts, the preprocessor 32 generates a plurality of data files according to the service information, wherein each of these data files are formatted as SHS data sets.

A statistical analyzer 34 analyzes the plurality of processed service information to determine a plurality of compartment failure information. The compartment failure information may include compartment failure parameters, and compartment time-to-failure coefficients. Compartment failure parameters are variables that affect the time that an event occurs (i.e., the time that a compartment has to be serviced). For example, in the aircraft engine scenario, the thrust rating of the engine and the environment that the engine flies in are examples of possible compartment failure parameters. Compartment time-to-failure coefficients are coefficients that are applied to each of the compartment failure parameters. The compartment failure parameters and associated compartment time-to-failure coefficients are used to determine the time that a compartment has to be serviced. In addition, the statistical analyzer 34 uses this information to determine which compartment failure parameters influence service events and estimate failure rate distributions for the compartments.

The statistical analyzer 34 comprises several scripts that enable it to perform the aforementioned functions as well as some additional functions. One particular script that the statistical analyzer 34 uses is a service analysis script that executes a plurality of statistical procedures. The plurality of statistical procedures may comprise a multi-variate regression and/or a correlation analysis. Both the multi-variate regression and correlation can determine which compartment failure parameters influence service events and estimate failure rate distributions for the compartments. The statistical analyzer 34 uses other scripts to output this information as statistical diagnostics 36 and residual plots 38. The statistical diagnostics may include the compartment time-to-failure coefficients for each compartment associated with the product. Other statistical diagnostics that may be outputted include goodness-of-fit metrics and collinearity diagnostics. These enable a user to determine the most appropriate compartment model in the statistical analyzer 34. Residual plots enable a user of the system 28 to determine how well the regression model fits the service information. Generally, the residual plots are defined as the difference between the actual time values and predicted time values. A small residual value is an indication that the regression or correlation analysis was a good fit, whereas a large residual value is an indication that the fit was not too good.

In addition to residual plots, the statistical analyzer 34 may use another script to output information such as probability plots, which enables one to assess whether the distribution for each compartment is appropriate or not. Another script may be used to generate a plot of residuals versus each parameter that affects the time that a service event occurs. Still another script may be used to generate a standard error associated with each of the compartment time-to-failure coefficients. Also, a script may be used to generate a P value, which is an indication of whether a particular parameter has a significant effect on the time that a service event occurs.

Referring again to Fig. 2, the system 28 also comprises a simulator 40 that simulates the service events of the product according to the plurality of compartment failure information and predicts the timing and costs of the service events. In particular, the simulator 40 takes the compartment time-to failure coefficients and determines a Weibull distribution for each compartment defined for the product. In addition, the simulator 40 uses the compartment distributions to determine the overall distribution for the product. Generally, the simulator uses an event-driven Monte Carlo simulation. After performing the simulation, the simulator 40 generates several outputs. For instance, one output is the contract output 42, which typically comprises the following: maintenance event distribution parameters over time; maintenance cost distributions over time by cost category (e.g., material cost versus labor cost); demand distributions spare/leased equipment; and equipment performance distributions (e.g., aircraft engine time on wing). The simulator 40 is not limited to these outputs and it is possible to use other outputs if desired.

In order to determine the performance of the simulator 40, the system 28 uses a validator, which can be part of the statistical analyzer 34 or the simulator or separate from both. The validator contains a validation script prepared for a case study done for the product. For purposes of this disclosure, a case study is defined as any subset of historical service event data that is used for model validation. For example, the service events that took place on a group of randomly chosen systems over the past year may serve as a case study, and during validation, a comparison is made between the number of service events projected by the model for these systems over this period of time and the actual number of service events that took place. The validation script will compare the compartment distributions determined by the simulator 40 to the distributions that actually happened in the case study. After making the comparison, the validator generates a series of graphical outputs 44 on cost distributions, availability, reliability and various financial information. In a preferred embodiment, three sets of reliability graphs are generated. The first set of reliability graphs is relative frequency histograms of the actual compartment distributions for each of the first four shop visits for the case study. Overlaid on these relative frequency histograms are the compartment distributions determined by the simulator 40. The second set of reliability graphs are relative frequency histograms of the actual system level distributions for each of the first four shop visits for the case study. Overlaid on each of these relative frequency histograms are the system distributions determined by the simulator 40. The third set of reliability graphs are non-parametric Kaplan-Meier estimated survival curves determined from both the actual system level distribution and the system level distribution determined by the simulator 40 for each of the first four shop visits. From these outputs, a user can generate a service plan forecast for the product that comprises time for scheduling service events and the costs associated with fulfilling the events.

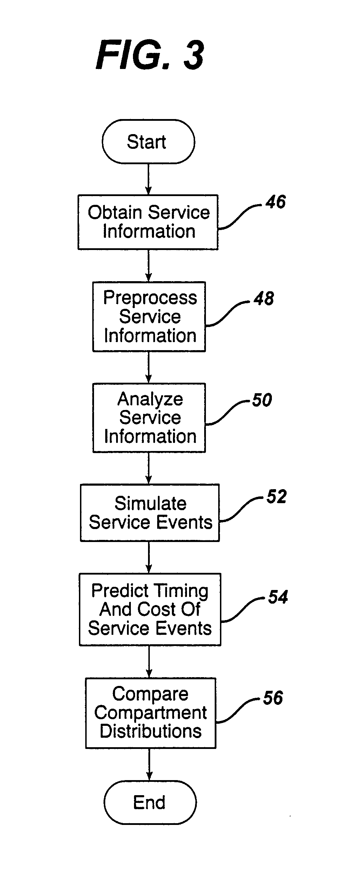

Fig. 3 shows a flow chart describing actions performed by the system 28 shown in Fig. 2. At block 46, a plurality of service information for the product stored in the service database is obtained. The preprocessor preprocesses the plurality of service information into a predetermined format at 48. The statistical analyzer analyzes the plurality of processed service information to determine a plurality of compartment failure information at 50. In particular, the statistical analyzer determines both the compartment time-to-failure coefficients and the compartment failure parameters using the aforementioned statistical procedures. The statistical analyzer outputs the compartment time-to-failure coefficients and the compartment failure parameters to the simulator and generates various residual plots. At 52, the simulator simulates the service events of the product according to the compartment failure information and predicts the timing and costs of the service events at 54. As mentioned above, this information is in the form of distributions for each compartment that makes up the product. The validator compares the compartment distributions determined by the simulator to the distributions that actually happened in the case study at 56. After making the comparison, the validator generates a series of graphical outputs on cost distributions, availability, reliability and various financial information.

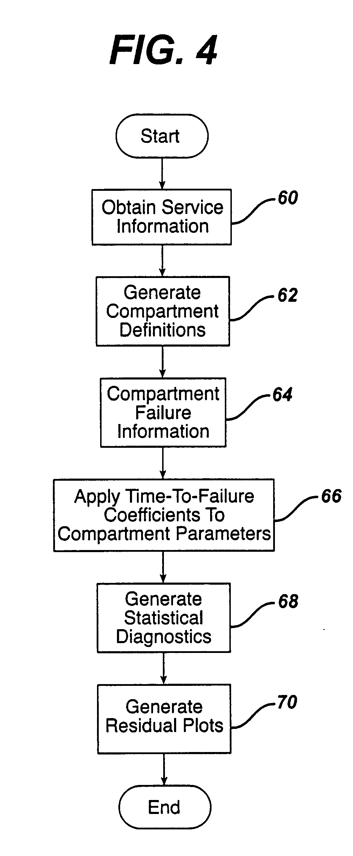

Fig. 4 shows a flow chart describing the actions performed by the statistical analyzer shown in Fig. 2. At block 60, the statistical analyzer obtains the service information from the preprocessor. The statistical analyzer then generates compartment definitions for the service information at 62. At 64, the statistical analyzer determines compartment failure information such as the compartment failure parameters and compartment time-to-failure coefficients using the aforementioned statistical procedures. The statistical analyzer then applies the compartment time-to-failure coefficients to the compartment failure parameters at 66. At block 68, the statistical analyzer generates various statistical diagnostics for each compartment associated with the product. At block 70, the statistical analyzer generates residual plots and probability plots and other types of plots if desired. As mentioned above, the statistical analyzer can generate other information such as standard error associated with each of the compartment time-to-failure coefficients and a *P* value.

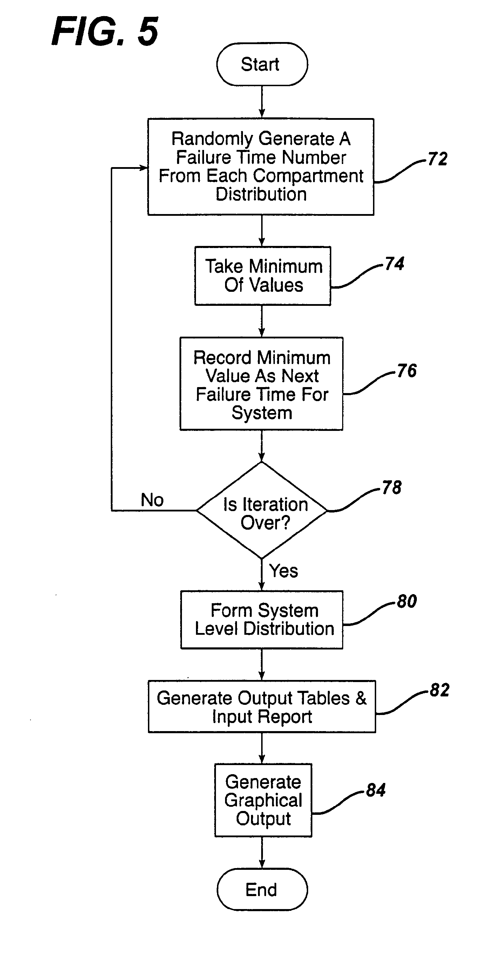

Fig. 5 shows a flow chart describing the actions performed by the simulator 40 shown in Fig. 2. As mentioned earlier, the simulator 40 is interested in determining the distribution of failures at the product's system level so that the timeliness and cost of service events can be predicted. The simulator 40 is able to determine the distribution of failures at the product's system level because of the information provided by the statistical analyzer 34. The information (i.e., time-to-failure coefficients and compartment parameters) provided by the statistical analyzer 34 facilitates an understanding of each of the compartments that make up the product's system level and their relationship with each other. The simulator 40 uses this information to examine the system or aggregate level and predict the overall costs to service the product. Referring back to Fig. 5, the actions performed by the simulator begin at block 72, where a random number of failure times (i.e., service events) for each compartment distribution are generated. From the randomly generated numbers of failure times, the minimum of values is found at 74. The simulator designates *t*_{*i*} as the minimum time, where *i* is the compartment associated with this time value. The simulator then records the minimum time *t*_{*i*} as the next failure time (i.e., time for a service event) for the system level at 76. At 78, the simulator determines whether there are any more system level failures needed. If so, then blocks 72-76 are repeated until there are enough failure times for the system. Once all of the iterations have been repeated, the simulator forms a system level distribution from the failure times at 80. At 82, the simulator generates the output tables and the input report, while a graphical output is generated at 84.

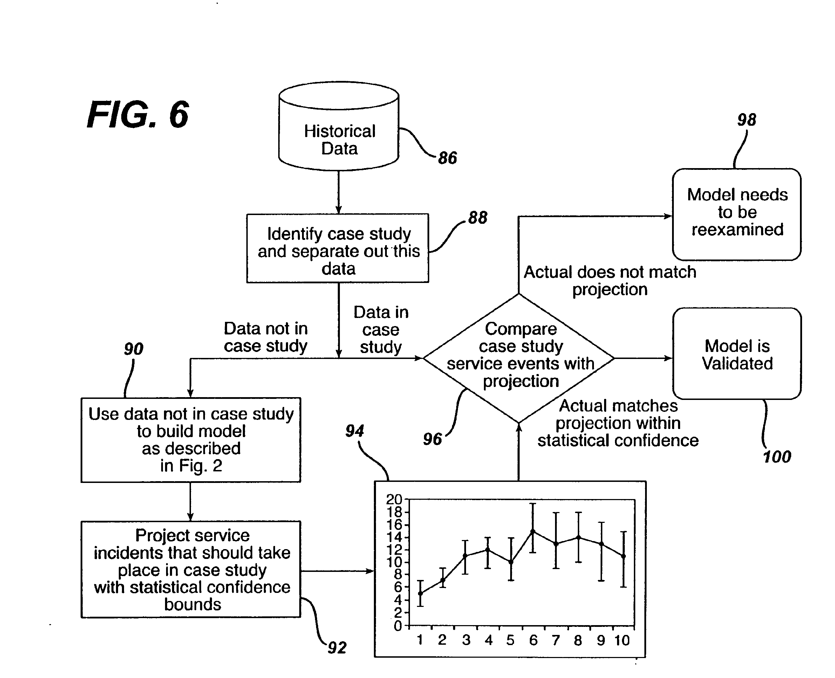

Fig. 6 shows a flow diagram describing the validating actions performed by the system shown in Fig. 1. In this diagram, historical service event data are stored in a database at 86. After identifying a case study, the historical service event data are separated out according to the case study at 88. If the historical service event data are not in the case study, then this data are used to build a model as described in Fig. 2 at 90. Project service incidents along with statistical confidence bounds that should take place in the case study are determined at 92. An example of the project service incidents along with statistical confidence bounds are shown at 94. The service incidents are compared to data that are used in the case study at 96. If the actual data do not match the projection, then the model needs to be reexamined as noted at 98. On the other hand, if the data do match the projection within the statistical confidence bounds, then the model is validated as noted at 100.

The foregoing flow charts of this disclosure show the architecture, functionality, and operation of a possible implementation of the system for predicting the timing and costs of service events in a life cycle of a product. In this regard, each block represents a module, segment, or portion of code, which comprises one or more executable instructions for implementing the specified logical function(s). It should also be noted that in some alternative implementations, the functions noted in the blocks may occur out of the order noted in the figures, or for example, may in fact be executed substantially concurrently or in the reverse order, depending upon the functionality involved.

The above-described system and method for predicting the timing and costs of service events in a life cycle of a product comprise an ordered listing of executable instructions for implementing logical functions. The ordered listing can be embodied in any computer-readable medium for use by or in connection with a computer-based system that can retrieve the instructions and execute them. In the context of this application, the computer-readable medium can be any means that can contain, store, communicate, propagate, transmit or transport the instructions. The computer readable medium can be, for example but not limited to, an electronic, magnetic, optical, electromagnetic, infrared, or semiconductor system, apparatus, or device. An illustrative, but non-exhaustive list of computer-readable mediums can include an electrical connection (electronic) having one or more wires, a portable computer diskette (magnetic), a random access memory (RAM) (magnetic), a read-only memory (ROM) (magnetic), an erasable programmable read-only memory (EPROM or Flash memory) (magnetic), an optical fiber (optical), and a portable compact disc read-only memory (CDROM) (optical). It is even possible to use paper or another suitable medium upon which the instructions are printed. For instance, the instructions can be electronically captured via optical scanning of the paper or other medium, then compiled, interpreted or otherwise processed in a suitable manner if necessary, and then stored in a computer memory.

For completeness, various aspects of the invention are set out in the following numbered clauses:-
1. A system (28) for predicting timing and costs of service events in a life cycle of a product formed from a plurality of compartments, comprising:
   a service database (30) containing a plurality of service information for the product;
   a preprocessor (32) for processing the plurality of service information into a predetermined format;
   a statistical analyzer (34) for analyzing the plurality of processed service information to determine a plurality of compartment failure information; and
   a simulator (40) for simulating the service events of the product according to the plurality of compartment failure information and predicting the timing and costs of the service events.
2. The system (28) according to clause 1, wherein the plurality of service information comprises compartment definitions, repair history and service factors.
3. The system (28) according to clause 1, wherein the preprocessor (34) generates a plurality of data files according to the plurality of service information.
4. The system (28) according to clause 1, wherein the plurality of compartment failure information comprises compartment failure parameters and compartment time-to-failure coefficients.
5. The system (28) according to clause 4, wherein the statistical analyzer (34) uses the plurality of compartment failure information to determine which compartment failure parameters influence service events and estimate failure rate distributions for the compartments.
6. The system (28) according to clause 1, wherein the statistical analyzer comprises a service analysis script that executes a plurality of statistical procedures.
7. The system (28) according to clause 6, wherein the plurality of statistical procedures comprise a multivariate regression and/or a correlation analysis.
8. The system (28) according to clause 6, wherein the service analysis script generates a plurality of statistical diagnostic information (36).
9. The system (28) according to clause 8, wherein the plurality of statistical diagnostic information (36) comprises goodness-of-fit metrics and collinearity diagnostics.
10. The system (28) according to clause 6, wherein the service analysis script generates a plurality of residual plots (38).
11. The system (28) according to clause 1, wherein the statistical analyzer (34) comprises a validation script.
12. The system (28) according to clause 11, wherein the validation script is applied to a plurality of case studies set up for the product.
13. The system (28) according to clause 1, wherein the simulator (40) forecasts a service plan for the product according to the simulated service events, wherein the service plan comprises the time for scheduling the service events and the costs associated therewith.
14. A system (28) for predicting timing and costs of service events in a life cycle of a product formed from a plurality of compartments, comprising:
   means for containing (30) a plurality of service information for the product;
   means for preprocessing (32) the plurality of service information into a predetermined format;
   means for analyzing (34) the plurality of processed service information to determine a plurality of compartment failure information; and
   means for simulating (40) the service events of the product according to the plurality of compartment failure information and predicting the timing and costs of the service events.
15. The system (28) according to clause 14, wherein the plurality of service information comprises compartment definitions, repair history and service factors.
16. The system (28) according to clause 14, wherein the preprocessing means generates (32) a plurality of data files according to the plurality of service information.
17. The system (28) according to clause 14, wherein the plurality of compartment failure information comprises compartment failure parameters and compartment time-to-failure coefficients.
18. The system (28) according to clause 17, wherein the analyzing means (34) uses the plurality of compartment failure information to determine which compartment failure parameters influence service events and estimate failure rate distributions for the compartments.
19. The system (28) according to clause 14, wherein the analyzing means (34) comprises a service analysis script that executes a plurality of statistical procedures.
20. The system (28) according to clause 19, wherein the plurality of statistical procedures comprise a multivariate regression and/or a correlation analysis.
21. The system (28) according to clause 19, wherein the service analysis script generates a plurality of statistical diagnostic information (36).
22. The system (28) according to clause 21, wherein the plurality of statistical diagnostic information (36) comprises goodness-of-fit metrics and collinearity diagnostics.
23. The system (28) according to clause 19, wherein the service analysis script generates a plurality of residual plots (38).
24. The system (28) according to clause 14, wherein the analyzing means (34) comprises a validation script.
25. The system (28) according to clause 24, wherein the validation script is applied to a plurality of case studies set up for the product.
26. The system (28) according to clause 14, wherein the simulating means (40) forecasts a service plan for the product according to the simulated service events, wherein the service plan comprises the time for scheduling the service events and the costs associated therewith.
27. A method for predicting timing and costs of service events in a life cycle of a product formed from a plurality of compartments, comprising;
   storing a plurality of service information for the product;
   preprocessing the plurality of service information into a predetermined format;
   analyzing the plurality of processed service information to determine a plurality of compartment failure information; and
   simulating the service events of the product according to the plurality of compartment failure information and predicting the timing and costs of the service events.
28. The method according to clause 27, wherein the plurality of service information comprises compartment definitions, repair history and service factors.
29. The method according to clause 27, wherein the preprocessing generates a plurality of data files according to the plurality of service information.
30. The method according to clause 27, wherein the plurality of compartment failure information comprises compartment failure parameters and compartment time-to-failure coefficients.
31. The method according to clause 30, wherein the analyzing uses the plurality of compartment failure information to determine which compartment failure parameters influence service events and estimate failure rate distributions for the compartments.
32. The method according to clause 27, wherein the analyzing comprises using a service analysis script that executes a plurality of statistical procedures.
33. The method according to clause 32, wherein the plurality of statistical procedures comprise a multivariate regression and/or a correlation analysis.
34. The method according to clause 32, wherein the service analysis script generates a plurality of statistical diagnostic information.
35. The method according to clause 34, wherein the plurality of statistical diagnostic information comprises goodness-of-fit metrics and collinearity diagnostics.
36. The method according to clause 32, wherein the service analysis script generates a plurality of residual plots.
37. The method according to clause 27, wherein the analyzing comprises using a validation script.
38. The method according to clause 37, wherein the validation script is applied to a plurality of case studies set up for the product.
39. The method according to clause 27, wherein the simulating forecasts a service plan for the product according to the simulated service events, wherein the service plan comprises the time for scheduling the service events and the costs associated therewith.
40. A computer-readable medium (14) storing computer instructions for instructing a computer system to predict timing and costs of service events in a life cycle of a product formed from a plurality of compartments, the computer instructions comprising:
   storing a plurality of service information for the product;
   preprocessing the plurality of service information into a predetermined format;
   analyzing the plurality of processed service information to determine a plurality of compartment failure information; and
   simulating the service events of the product according to the plurality of compartment failure information and predicting the timing and costs of the service events.
41. The computer-readable medium (14) according to clause 40, wherein the plurality of service information comprises compartment definitions, repair history and service factors.
42. The computer-readable medium (14) according to clause 40, wherein the preprocessing instructions generates a plurality of data files according to the plurality of service information.
43. The computer-readable medium (14) according to clause 40, wherein the plurality of compartment failure information comprises compartment failure parameters and compartment time-to-failure coefficients.
44. The computer-readable medium (14) according to clause 43, wherein the analyzing instructions uses the plurality of compartment failure information to determine which compartment failure parameters influence service events and estimate failure rate distributions for the compartments.
45. The computer-readable medium (14) according to clause 44, wherein the analyzing instructions comprises using a service analysis script that executes a plurality of statistical procedures.
46. The computer-readable medium (14) according to clause 45, wherein the plurality of statistical procedures comprise a multivariate regression and/or a correlation analysis.
47. The computer-readable medium (14) according to clause 45, wherein the service analysis script generates a plurality of statistical diagnostic information.
48. The computer-readable medium (14) according to clause 47, wherein the plurality of statistical diagnostic information comprises goodness-of-fit metrics and collinearity diagnostics.
49. The computer-readable medium (14) according to clause 45, wherein the service analysis script generates a plurality of residual plots.
50. The computer-readable medium (14) according to clause 40, wherein the analyzing instructions comprises using a validation script.
51. The computer-readable medium (14) according to clause 50, wherein the validation script is applied to a plurality of case studies set up for the product.
52. The computer-readable medium (14) according to clause 40, wherein the simulating instructions forecast a service plan for the product according to the simulated service events, wherein the service plan comprises the time for scheduling the service events and the costs associated therewith.

## Claims

1. A system (28) for predicting timing and costs of service events in a life cycle of a product formed from a plurality of compartments, comprising:
a service database (30) containing a plurality of service information for the product;
a preprocessor (32) for processing the plurality of service information into a predetermined format;
a statistical analyzer (34) for analyzing the plurality of processed service information to determine a plurality of compartment failure information; and
a simulator (40) for simulating the service events of the product according to the plurality of compartment failure information and predicting the timing and costs of the service events.

2. The system (28) according to claim 1, wherein the plurality of service information comprises compartment definitions, repair history and service factors.

3. The system (28) according to claim 1, wherein the preprocessor (34) generates a plurality of data files according to the plurality of service information.

4. The system (28) according to claim 1, wherein the plurality of compartment failure information comprises compartment failure parameters and compartment time-to-failure coefficients.

5. The system (28) according to claim 1, wherein the statistical analyzer comprises a service analysis script that executes a plurality of statistical procedures.

6. The system (28) according to claim 1, wherein the statistical analyzer (34) comprises a validation script.

7. The system (28) according to claim 1, wherein the simulator (40) forecasts a service plan for the product according to the simulated service events, wherein the service plan comprises the time for scheduling the service events and the costs associated therewith.

8. A system (28) for predicting timing and costs of service events in a life cycle of a product formed from a plurality of compartments, comprising:
means for containing (30) a plurality of service information for the product;
means for preprocessing (32) the plurality of service information into a predetermined format;
means for analyzing (34) the plurality of processed service information to determine a plurality of compartment failure information; and
means for simulating (40) the service events of the product according to the plurality of compartment failure information and predicting the timing and costs of the service events.

9. A method for predicting timing and costs of service events in a life cycle of a product formed from a plurality of compartments, comprising;
storing a plurality of service information for the product;
preprocessing the plurality of service information into a predetermined format;
analyzing the plurality of processed service information to determine a plurality of compartment failure information; and
simulating the service events of the product according to the plurality of compartment failure information and predicting the timing and costs of the service events.

10. A computer-readable medium (14) storing computer instructions for instructing a computer system to predict timing and costs of service events in a life cycle of a product formed from a plurality of compartments, the computer instructions comprising:
storing a plurality of service information for the product;
preprocessing the plurality of service information into a predetermined format;
analyzing the plurality of processed service information to determine a plurality of compartment failure information; and
simulating the service events of the product according to the plurality of compartment failure information and predicting the timing and costs of the service events.
